# EUROPEAN PATENT APPLICATION

(11) **EP 3 269 760 A1**
(43) Date of publication of application: **17.01.2018**
(21) Application number: 16178902.9
(22) Date of filing: 11.07.2016
(51) Int. Cl.: C08J 5/18, C08K 3/26, C09D 129/14, C09D 131/04, C08K 5/098, C08K 5/10, C08K 13/02, C08L 29/14, C08L 31/04

(54) **POLYVINYL BUTYRAL DISPERSIONS**

(71) Applicant: Aquaspersions Ltd., Halifax, Yorkshire HX3 6AQ (GB)
(72) Inventor: SMITH, Paul, Halifax, Yorkshire HX3 0QL (GB); BEWSHER, Alan, Ripponden, Yorkshire HX6 4JE (GB); RUGGLES, Colin, Waltham Abbey, Essex EN9 3AW (GB)
(74) Representative: Browne, Robin Forsythe

(57) **Abstract**

A stable aqueous film forming dispersion comprising:
a polymer selected from the group consisting of: polyvinyl butyral, polyvinyl acetyl, ethylene vinyl acetate, vinyl acetate and mixtures thereof:
a plasticiser;
an emulsifier; and
a water soluble organometallic crosslinking agent.

## Description

This invention relates to polymeric dispersions, particularly but not exclusively dispersions of polyvinyl butyral (PVB). The invention also relates to a process for formation of films using the dispersions and to films made using the process.

Polyvinyl butyral (PVB) polymers were developed in the 1930's and are manufactured from vinyl acetate polymers that have undergone transesterification in either acid or basic conditions to form the corresponding polyvinyl alcohol. Polyvinyl butyral and other polyvinyl acetal products are formed by the acetylation of polyvinyl alcohol using aldehydes such as formaldehyde, butyraldehyde, propylaldehyde. Plasticised polyvinyl butyral is used to make flexible polymeric films which may be used as an interlayer in automotive and architectural glass sheets to provide impact resistance and to increase the impact resilience and structural integrity of the sheets.

PVB and polyvinyl acetals also find use as in solvent based coatings, inks and varnishes for metal coatings and wire enamels. Where coatings are needed, the PVB has been applied as a solution in a volatile organic solvent, together with small amounts of other additives. Typical application are for anti-corrosive primers for metals, but also include wire enamels and solvent based printing inks.

The presence of volatile solvents limits the suitability of these coatings due to increased environmental regulations on levels of volatile organic compounds in coatings with a move towards reducing/eliminating solvents in the coatings market. However replacement of a solvent with a water based system has adverse consequences on the formation and water resistance of the coatings due to the inherent presence of a surfactant stabiliser in such systems.

Commercially available dispersions of PVB and plasticiser, for example dispersions as sold under the trade marks AQUAREZ, SHARK and BUTVAR are useful for a variety of coating and binding applications. The films form at room temperature and have good release properties from substrates such as metal, polymers, wood and glass.

There is a need for a water-based plasticised PVB dispersion that can form a tough durable and water resistant coating since PVB dispersions find extensive application in external uses, especially in strippable coatings used to protect exterior glass or metal surfaces during storage and construction,

PVB resins possess three functionalities. These are acetyl, residual hydroxyl from the base PVOH used during manufacture, and residual acetate functionalities from base vinyl acetate polymer used to make vinyl alcohol. PVB with various ratios of acetyl, hydroxyl and acetate are available from a number of companies, e.g. Kuraray, Eastman, CCP, Sekisui. PVB is available in a number of molecular weights and functionalities.

According to a first aspect of the present invention, a stable aqueous film forming dispersion comprises:
a polymer selected from the group consisting of: polyvinyl butyral, polyvinyl acetyl, ethylene vinyl acetate, vinyl acetate and mixtures thereof:
   a plasticiser;
   an emulsifier; and
   a water soluble organometallic crosslinking agent.

A preferred polymer is polyvinyl butyral. Especially advantageous polyvinyl butyral polymers have one or more properties selected from the following properties.

The molar mass may be in the range 10,000-120,000. Exemplary polymers have a molar mass in the ranges 15,000-30,000, 50,000-60,000 and 95,000-110,000.

The hydroxyl content may be in the range of 12% to 27%, preferably 18% to 21%.

The glass transition temperature (Tg) may be in the range 66°C to 84°C, preferably 64°C to 73°C.

The residual acetate content may be in the range 0% to 18%, preferably 1% to 4%.

The dispersion may be provided as an oil-in-water dispersion, which is liquid at ambient temperatures.

The following polymers have been found to be particularly advantageous.

Mowital/Pioloform B20H (ex. Kuraray GmbH). This is a low molecular weight PVB with typical molar mass of between 15000-30000g/mol, Tg of 64°C, hydroxyl content of between 18-21%wt., and residual acetate of 1-4%wt. It is supplied in powder form with a total solids of ≥ 97.5% and a 10% ethanol solution viscosity between 14-20 mPa.s.

Mowital B30H (ex. Kuraray GmbH). This is a medium molecular weight PVB with a typical molar mass of 25,000-38,000g/mol, Tg of 68°C, hydroxyl content of 18-21% wt%, residual acetate content of 1-4% and a 10% ethanol solution viscosity of 35-60mPa.s.

Poly G (= Mowital B75H. Ex. Kuraray GmbH). This is a high molecular weight PVB with molar mass between 95,000 - 110,000, Tg of 73°C, hydroxyl content 18wt% to 21wt% and residual acetate content 1wt% to 4wt%. It is supplied as powder (B75H), flake or in granular (Poly G) form with TS of ≥ 97.5%. and a 5% ethanol solution viscosity of between 60-100mPa.s.

Mowital / Pioloform B60H (ex. Kuraray GmbH). This is a high MW PVB with typical molar mass 50,000-60,000, Tg of 70°C, Hydroxyl content 18-21%wt and residual acetate of 1-4%wt. It is supplied in powder form with TS ≥97.5% and a 10% ethanol solution viscosity of 160-260mPa.s.

PVB resins with higher or lower levels of residual hydroxyl content of such Mowital HH (-OH residual: 11-16%wt) and Mowital T (-OH residual 24-27%wt) can also be used as can any PVB resins with molar masses between 10,000 - 120,000. Furthermore, PVB resins with lower degree of acetylation and higher residual acetate of up to 18% can be selected for emulsification such as Mowital BX 860 (ex. Kuraray GmbH).

Alternatively, the polymer may comprise completely or in part recycled or reclaimed PVB such as may be recovered from laminated automobile and architectural glass.

The amount of the polymer may be 10wt% to 50wt%, preferably 35wt% to 45wt%.

In embodiments in which the polymer is polyvinyl butyral, the amount may be 15wt% to 45wt%, preferably 30wt% to 45wt%.

In embodiments the polyvinyl butyral is plasticised to enable film formation at ambient temperature using a suitable plasticiser known by those practised in the art selected but not exclusively from castor oil, butyl ricinoleate, dibutyl sebacate, glycerol trisebacate, adipates and phthalates including triethylene glycol bis-(2-ethyl hexanoate). The amount of plasticiser may be 2wt% to 20wt% of the emulsion more preferably 10wt% to 18wt%.

The crosslinking agent may comprise a water dispersible latent organometallic crosslinking agent. A preferred crosslinking agent is ammonium zirconium carbonate (AZC), for example BACOTE 20 supplied by MEL. Further preferred crosslinking agents include titanium ammonium lactate, for example ORGATIX TC-300, triethylonomene titanate, for example ORGATIX TC-400 supplied by Mazimuto Fine Chemical Limited. Zinc and boron containing crosslinking agents may also be employed.

The crosslinking agents may be supplied as solutions. For example, AZC may be supplied in an 18wt% aqueous solution. The amounts referred to below are by wet weight of the ingredient.

The amount of the crosslinking agent may be 0.05wt% to 1.0wt%, preferably 0.15wt% to 0.35wt%.

The emulsifier may be selected from fatty acid esters of saturated or unsaturated C₃ to C₂₂ carboxylic acids, preferably stearates, oleates and laurates.

The amount of the emulsifier may be 1.5wt% to 10wt%, preferably 2wt% to 4 wt% and more preferably between 2.2wt% to 3.0wt%.

The plasticiser may be selected from: castor oil, butyl ricinoleate, glyceryl benzoate, sebacates, for example dibutyl sebacate, benzoates, for example glyceryl tribenzole, adipates and phthalates. The amount of the plasticiser may be 5wt% to 25wt%, preferably 5wt% to 15wt%.

The amount of water used may be from 40wt% to 75wt%, more preferably from 50wt% to 60wt%.

Optional further ingredients which may be employed include: water based biocidal agents, natural thickeners such as xanthan gum, cellulose ether, carboxy methyl cellulose, guar, polysaccharides. Also associative thickeners such fully hydrolysed polyacrylic acid, polyurethane (HEUR) and HASE thickeners can be incorporated to control rheology, sedimentation and storage stability.

According to a second aspect of the present invention, a method of preparation of a stable aqueous film forming dispersion comprises the steps of:
heating a mixture comprising:
   a polymer selected from the group consisting of: polyvinyl butyral, polyvinyl acetal, ethylene vinyl acetate, vinyl acetate and mixtures thereof:
      a plasticiser;
      an emulsifier; and
      water,
      with stirring under pressure at a temperature between 110°C and 150°C to form a water-in-oil emulsion plasticised polymer melt;
      adding water to the melt to cause phase inversion to form an oil-in-water emulsion;
      cooling the oil-in-water emulsion to a temperature between 0°C and 40°C;
      adding a water soluble organometallic crosslinking agent and any optional further additives to form a stable aqueous film forming dispersion.

The ingredients of the composition may be as disclosed in accordance with the first aspect of the present invention

The dispersion may be solid at ambient temperatures.

The preferred mixing temperature is in the range 125°C to 135°C.

The ingredients may be mixed in a pressure vessel to form the emulsion. Alternatively an extruder may be used.

A preferred method using an extruder is disclosed in EP 1971471, the disclosure of which is incorporated into this specification for all purposes by reference.

A preferred procedure comprises the following steps:
a) Addition of plasticiser and initial water to a heated and pressure rated mixing vessel equipped with a suitable agitator.
b) Add PVB resin and stir contents for 1 hour.
c) Then add required alkali neutralised fatty acid soap to mixture and seal the mixing vessel. Stir contents at 300 rpm for 1.5 hours and heat product to temperature of between 110°C to 150°C or more preferably between 125 to 135°C to fully combine the contents and form a water-in-oil emulsion plasticised polymer melt.
d) Then slowly add first 12.5% of hot water (80 to 95°C) to the polymer melt over 20 - 25 minutes to initiate the phase inversion process of converting the 'water-in-oil' emulsion to an 'oil-in-water'. This inversion process is characterised by a significant or sharp rise in viscosity of the emulsion. Beyond the phase inversion point the remaining hot water can be added quickly and will result in a steady reduction in the viscosity of the resulting PVB emulsion.
e) Once all water has been added the contents of the vessel are cooled to below 40°C at which point any further additives (e.g. thickener, biocide) can be added to the emulsion.
f) An aqueous solution of ammonium zirconium carbonate or other suitable water soluble organometallic cross-linking agent is then added.
g) The final PVB emulsion may be discharged via a suitable filtration system to remove any aggregates formed during the pressurised emulsification process.

According to a third aspect of the present invention there is provided a film or coating formed by removal of water from a dispersion in accordance with the first aspect of this invention or made by the method of the second aspect of this invention.

Films in accordance with this invention may be formed at ambient temperatures and may comprise coherent tack free films without outstanding hydrophobicity. The films may be resistant to water penetration when subject to wet or high humidity environments. The films are suitable for formation of coatings and adhesives for temporary or permanent protection of or adhesion to substrates such as metals, glass, polymers and wood.

The dispersions are stable at ambient or working temperatures used for storage for water based dispersions. The dispersions provide a single component system which can be stored for a long period, for example six months, before activation by drying.

Without wishing to be bound by theory, it is believed that the crosslinking agent serves to crosslink residual PVB hydroxyl functionality and carboxylic acid functionality of the polymer and emulsifier respectively, the crosslinking being initiated by the loss of water and evaporation of ammonia during drying of the film. The cross-linked emulsifier and PVB may form a hydrophobic barrier significantly reducing the water sensitivity of the dried film without the need for heat or secondary cross-linking. This significantly increases the water resistivity of the dried film or coating when subjected to water immersion, rain or very high humidity environments.

Without the addition of the water soluble organometallic cross-linker the emulsifier and hydroxyl functionality on PVB resin may remain essentially unchanged increasing the hydrophilicity and leading to high water permeability of the resultant film or coating.

The crosslinkable and plasticised PVB dispersions of this invention are suitable for the production of temporary protective coatings for use in the automotive, marine, construction coating sectors. Examples of specific applications include temporary protective or decorative coatings for spray booths, cars, aerospace, advertising media and the like.

Percentages and other quantities referred to in the specification are by weight unless indicated otherwise. Amounts are selected from any ranges quoted to total 100%.

The invention is further described by means of example, but not in any limitative sense.

### Example 1 -

A dispersion was made using the following ingredients:-

| | wt/kg |
|---|---|
| Polymer G | 15.51 |
| Mowital B20H | 15.51 |
| Castor oil No 1 | 13.31 |
| Hot water | 38.29 |
| Oleic acid | 2.09 |
| 50% Potassium hydroxide | 0.41 |
| 33% Ammonia solution | 0.19 |
| Initial water | 10.37 |
| Acticide MBL | 0.2 |
| 1 % Xanthan gum solution | 3.8 |
| Ammonium zirconium carbonate (AZC) | 0.32 |
| Total | 100 |

The following procedure was used:-
1. Add castor oil and initial water to the pressure vessel.
2. Add Polymer G and Mowital B20H and stir at 200 rpm. Continue to stir for 1 hour in total.
3. Add pre reacted oleic acid, potassium hydroxide and ammonia and heat to 125-130'C
4. Stir at 300 rpm for 1.5 hours.
5. Add first 12.5% of water addition over 20-25 minutes and the remainder over 10 mins.
6. Once below 40'C add Acticide MBL biocide, xanthan gum solution
7. Add the required dosage of ammonium zirconium carbonate to one half of the sample. The second half was used for baseline evaluation.

### Example 1(a) - Composition without AZC (Reference DP 415-234)

The properties of the composition were as follows -
Total solids, % = 47.8
pH: 9.48
Particle size (d50), micron: 0.852

### Example 1(b) - Composition with 0.32 kg AZC added to the ingredients of Example 1(a) (Reference DP 415-234+AZC)

The properties of the composition were as follows -
Total solids, % = 47.23%
pH: 9.20
Particle size (d50), micron: 0.852

### Example 2 - A dispersion was made using the following ingredients:

| | wt/kg |
|---|---|
| Mowital B75H | 14.33 |
| Mowital B60H | 14.33 |
| Castor oil No 1 | 14.33 |
| 1076 | 0.5 |
| Hot water | 33.72 |
| Oleic acid | 2.09 |
| 50% potassium hydroxide | 0.83 |
| Initial water | 12.17 |
| Acticide MBL | 0.2 |
| 1 % xanthan gum solution | 7 |
| Ammonium zirconium carbonate (AZC) | 0.5 |
| Total | 100 |

The following procedure was used:
1. Add castor oil and initial water to the pressure vessel.
2. Add Mowital B75H and Mowital B60H and stir at 200 rpm. Continue to stir for 1 hour in total.
3. Add pre reacted oleic acid and potassium hydroxide and heat to 130°C-135°C
4. Stir at 300 rpm for 1.5 hours.
5. Add first 12.5% of water addition over 20-25 minutes and the remainder over 10 mins.
6. Once below 40'C add Acticide MBL biocide, xanthan gum solution.
7. Add the required dosage of ammonium zirconium carbonate to one half of the sample and use second half for baseline evaluation.

### Example 2(a) - Composition without AZC (Reference PVB 508)

The properties of the composition were as follows -
Total solids, % = 46.6
pH: 9.43
Particle size (d50), micron: 2.546

### Example 2(b) -0.5 kg of AZC was added to the ingredients of Example 2(a) (Reference PUB 508+AZC)

The properties of the composition were as follows -
Total solids, % = 46.3%
pH: 9.16
Particle size (d50), micron: 2.546

### Example 3(a) (Reference Competitor A)

A PVB emulsion derived from recovered plasticised PVB reclaimed from laminated glass stabilised with an emulsifier was used.

The properties of the composition were as follows:
Total solids, % = 47%
pH: 9.47
Particle size (d50), micron: 4.305

### Example 3(b) (Reference Competitor B)

A PVB emulsion plasticised with castor oil (2:1) and emulsified using sodium sulphonate was used.

The properties of the composition were as follows:
Total Solids, % = 42.44%
pH = 8.2
particle size (d50), micron = 4.265

### Example 4 - Test Results

### Method - Percentage water uptake

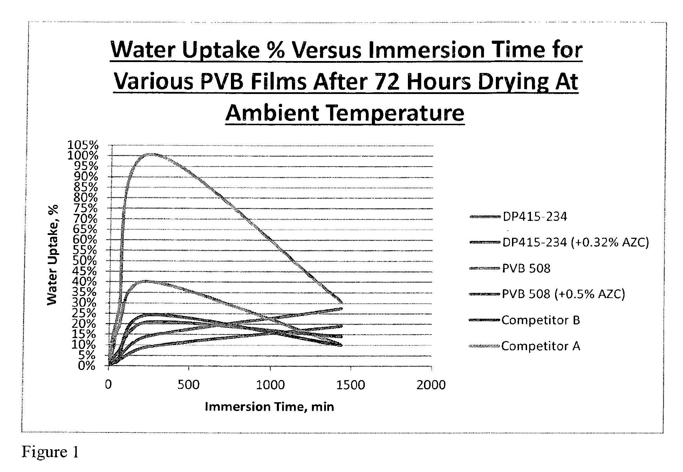

Pre-calculated quantities of each PVB emulsion were added to new aluminium weighing trays to give dry films with a thickness of 300 µm. These were dried for 72 hours at ambient temperature and on as flat as possible surface to ensure uniformity. Films were then cut in to shape and weighed. They were then placed in water for 5, 30, 60, 240 and 1440 minutes. After they had been immersed for the required time they were carefully dried of surface water and re-weighed. The results are shown in Figure 1 and Table 1.

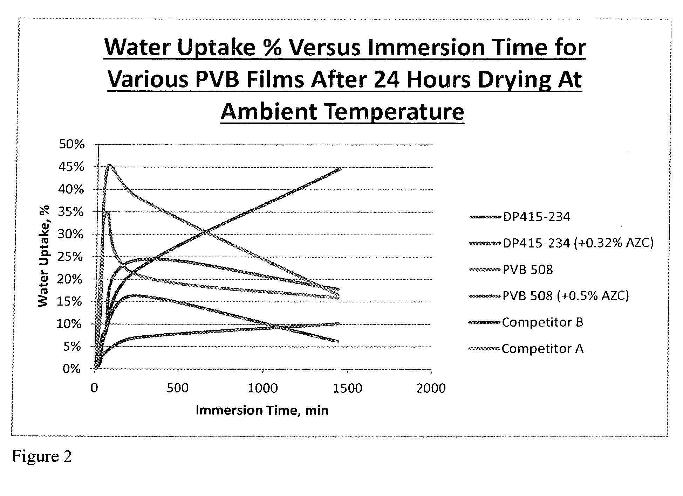

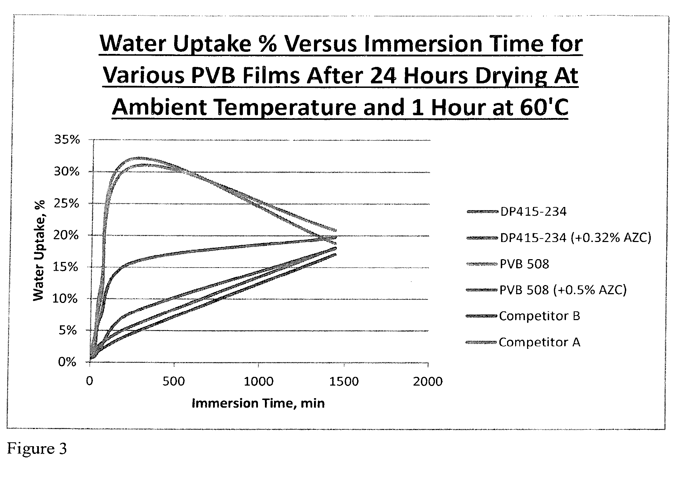

This was repeated with drying times of 24 hours and 24 hours + 1 hour at 60°C. The results are shown in Figure 2 and 3 and Tables 2 and 3.

Percentages of water taken up after 72 hours at ambient temperatures were as shown in the table below:

**Table 1**

| | 72 Hours Ambient | | | | |
|---|---|---|---|---|---|
| Reference | 5 | 30 | 60 | 240 | 1440 |
| Example 1(a) | 0.34% | 1.82% | 3.74% | 13.98% | **27.40%** |
| Example 1(b) | 0.62% | 1.50% | 2.38% | 9.00% | 19.03% |
| Example 2(a) | 1.92% | 8.79% | 18.14% | **40**.**17**% | **10.28%** |
| Example 2(b) | 0.89% | 4.19% | 6.58% | **20.79%** | **14.00%** |
| Example 3(a) | 0.45% | 1.33% | 2.28% | **24.25%** | **9.93%** |
| Example 3(b) | 4.42% | 16.46% | **26.48%** | **100.60%** | **30.55%** |

| | | | | | |
|---|---|---|---|---|---|
| NOTE: The % water uptakes highlighted in bold indicated that the dried film was beginning to lose integrity and re-emulsify during water immersion. | | | | | |

### 24 hours At Ambient:

**Table 2**

| | 24 hours | | | | |
|---|---|---|---|---|---|
| Reference | 5 | 30 | 60 | 240 | 1440 |
| Example 1(a) | 0.99% | 3.76% | 8.35% | **24.24%** | **17.85%** |
| Example 1(b) | 0.51% | 1.37% | 3.63% | 6.95% | **10.17%** |
| Example 2(a) | 3.16% | 13.15% | **45.03%** | **38.31%** | **16.58%** |
| Example 2(b) | 1.55% | 4.83% | 8.44% | **16.35%** | **6**.**22**% |
| Example 3(a) | 0.00% | 1.43% | 7.75% | **21.98%** | **44.60%** |
| Example 3(b) | 4.62% | 23.26% | **34**.**81**% | **21.11%** | **15.88%** |

### 24 Hours at ambient + 1 hour at 60°C.

**Table 3**

| | 24 hours +1 hour 60'C | | | | |
|---|---|---|---|---|---|
| Reference | 5 | 30 | 60 | 240 | 1440 |
| Example 1(a) | 0.73% | 0.95% | 2.83% | 5.63% | **18.05%** |
| Example 1(b) | 0.62% | 1.31% | 2.35% | 7.77% | 17.93% |
| Example 2(a) | 1.11% | 4.30% | 12.21% | **32.05%** | **18.75%** |
| Example 2(b) | 1.28% | 2.67% | 7.21% | 15.70% | **19.70%** |
| Example 3(a) | 0.63% | 0.99% | 1.91% | 4.48% | 17.02% |
| Example (3(b) | 1.55% | 4.57% | **10.28%** | **30.83%** | **20.82%** |

## Claims

1. A stable aqueous film forming dispersion comprising:
a polymerselected from the group consisting of: polyvinyl butyral, polyvinyl acetal, ethylene vinyl acetate, vinyl acetate and mixtures thereof:
a plasticiser;
an emulsifier; and
a water soluble organometallic crosslinking agent.

2. A dispersion as claimed in claim 1, wherein the polymer is polyvinyl butyral.

3. A dispersion as claimed in claim 1 or 2, wherein the polymerhas a molar mass in the range of 10,000 to 120,000.

4. A dispersion as claimed in any preceding claim, comprising an oil-in water dispersion.

5. A dispersion as claimed in any preceding claim, wherein the polymercomprises completely, or in part, recycled or reclaimed polyvinyl butyral.

6. A dispersion as claimed in any preceding claim, wherein the amount of the polymer is in the range of 10wt% to 50wt%, preferably 35wt% to 45wt%.

7. A dispersion as claimed in any preceding claim in which the polymer is polyvinyl butyral, wherein the amount of polymer is 15wt% to 45wt%, preferably 30wt% to 45wt%.

8. A dispersion as claimed in any preceding claim, wherein the plasticiser is selected from: castor oil, butyl ricinoleate, glyceryl benzoate, sebacates, for example dibutyl sebacate, benzoates, for example glyceryl tribenzole, adipates and phthalates.

9. A dispersion as claimed in claim 8, wherein the amount of the plasticiser is 2wt% to 20wt%, preferably 10wt% to 18wt%.

10. A dispersion as claimed in any preceding claim, wherein the crosslinking agent is ammonium zirconium carbonate.

11. A dispersion as claimed in claims 1 to 9, wherein the crosslinking agent is titanium ammonium lactate, triethanolamine titanate.

12. A dispersion as claimed in any preceding claim, wherein the amount of the crosslinking agent is 0.05wt% to 1.0wt%, preferably 0.15wt% to 0.35wt% by dry weight.

13. A dispersion as claimed in any preceding claim, wherein the emulsifier is selected from fatty acid esters of saturated or unsaturated C₃ to C₂₂ carboxylic acids in an amount of 1.5wt% to 10wt%, preferably 2wt% to 4wt%, more preferably 2.2wt% to 3.0wt%.

14. A method of preparation of an aqueous film forming emulsion comprising the steps of:
heating a mixture comprising a polymer selected from the group consisting of : polyvinyl butyral, polyvinyl acetal, ethylene vinyl acetate, vinyl acetate and mixtures thereof:
a plasticiser;
an emulsifier; and
water, with stirring under pressure at a temperature from 110°C to 150°C preferably from 125°C to 135°C, to form a water-in oil emulsion plasticised polymer melt;
adding water to the melt to cause phase inversion to form an oil-in water emulsion;
cooling the oil-in water emulsion to a temperature between 0°C and 40°C;
adding a water soluble organometallic crosslinking agent and optional further additives to form a stable aqueous film forming dispersion.

15. A method as claimed in claim 14, for preparation of a stabile aqueous film forming dispersion as claimed in any of claims 1 to 13.
